# EUROPEAN PATENT APPLICATION

(11) **EP 4 768 136 A1**
(43) Date of publication of application: **01.07.2026**
(21) Application number: 25808027.4
(22) Date of filing: 20.05.2025
(51) Int. Cl.: B05C 1/08, B05C 11/10, H01M 50/503

(54) **COATING DEVICE FOR SEPARATOR AND MANUFACTURING METHOD OF SEPARATOR USING SAME**

(30) Priority: 23.05.2024 KR 20240067355
(71) Applicant: LG Energy Solution, Ltd., Seoul 07335 (KR)
(72) Inventor: LEE, Byeong-Kyu, Daejeon 34122 (KR); KIM, Yu-Bae, Daejeon 34122 (KR); LEE, Seung-Hyun, Daejeon 34122 (KR); KA, Kyung-Ryun, Daejeon 34122 (KR)
(74) Representative: Hoffmann Eitle
(86) International application number: PCT/KR2025/006838
(87) International publication number: WO 2025/244394

(57) **Abstract**

The present disclosure provides a coating apparatus for a separator including a storage unit accommodating a coating solution; a coating roll configured to transfer the coating solution from the storage unit to at least one surface of a substrate being transferred in a direction; and a modular blade unit configured to remove some of the coating solution present on a surface of the coating roll, wherein the modular blade unit includes at least one blade, and the coating roll rotates in a same direction as the transport direction of the substrate.

## Description

### TECHNICAL FIELD

The present disclosure relates to a coating apparatus and a method for manufacturing a separator for a lithium secondary battery using the same.

This application is based on and claims priority from Korean Patent Application No. 10-2024-0067355 filed on May 23, 2024 with the Korean Intellectual Property Office, the disclosure of which is incorporated herein in its entirety by reference.

### BACKGROUND ART

There has been an increasing interest in energy storage technology in recent years. As the range of applications is extended to energy for mobile phones, camcorders, laptop computers and electric vehicles, many efforts in research and development of electrochemical devices have been made. In this aspect, electrochemical devices are attracting attention, and in the industrial sector, development of rechargeable secondary batteries is of great interest.

Secondary batteries are a chemical battery that can be used semi-permanently by continuously repeating charge and discharge using electrochemical reactions, and they are classified into lead-acid batteries, nickel-cadmium batteries, nickel-hydrogen batteries and lithium secondary batteries. Among them, lithium secondary batteries are leading the secondary battery market due to higher voltage and energy density than the other types of batteries.

Lithium secondary batteries have a structure in which an electrode assembly is filled with an electrolyte, the electrode assembly including a positive electrode and a negative electrode, each including an active material coated on a current collector, and a porous separator interposed between the positive electrode and the negative electrode. In this instance, the separator of the lithium secondary battery is manufactured by applying a coating solution for forming a porous coating layer to a porous polymer substrate and drying a solvent.

Meanwhile, a method for applying the coating solution to the substrate, specifically the porous polymer substrate may include, for example, dip coating, die coating, roll coating or comma coating. In this instance, roll coating refers to a method that transfers the coating solution stored in a storage to the substrate. In this instance, to control the coating solution present on the coating roll, a blade may be used. The coating roll may include recessed grooves on the surface to transfer a larger amount of coating solution to the substrate, and the number and depth of the grooves may be adjusted to control the amount of the coating solution transferred. However, to control the coating thickness, shape or pattern, it is necessary to manufacture a new coating roll, which increases the cost and time required to manufacture the separator.

Furthermore, to meet the demand for separators having various types of coating layers such as different patterns of coating layers on one substrate or coating layers having different thicknesses along the length direction of the substrate, there is a need for development of a coating apparatus for manufacturing such separators.

### DISCLOSURE

### Technical Problem

The present disclosure is designed to solve the above-described technical problems, and specifically, the present disclosure is directed to providing a coating apparatus for forming a coating layer having different thicknesses or multiple patterns on one substrate without needing to replace a coating roll.

The present disclosure is further directed to providing a method for manufacturing a separator for a lithium secondary battery having the coating layer having different thicknesses or multiple patterns on one substrate.

### Technical Solution

To achieve the above-described objectives, according to an aspect of the present disclosure, there are provided a coating apparatus of the following embodiments, and a method for manufacturing a separator for a lithium secondary battery using the same.

According to a first embodiment, there is provided the coating apparatus for the separator including a storage unit accommodating a coating solution; a coating roll configured to transfer the coating solution from the storage unit to at least one surface of a substrate being transferred in a direction; and a modular blade unit configured to remove some of the coating solution present on a surface of the coating roll, wherein the modular blade unit includes at least one blade, and the coating roll has a plurality of grooved portions of engraved pattern on the surface and rotates in a same direction as the transport direction of the substrate.

According to a second embodiment, in the first embodiment, the blade may have a protruding portion of embossed pattern.

According to a third embodiment, in any one of the first embodiment or the second embodiment, the modular blade unit may include at least two blades.

According to a fourth embodiment, in the third embodiment, the modular blade unit may further include a blade rotation portion to rotate the plurality of blades.

According to a fifth embodiment, in any one of the first to fourth embodiments, the modular blade unit may include at least two blades, and the at least two blades may have protruding portions of different embossed patterns.

According to a sixth embodiment, in any one of the first to fifth embodiments, the coating apparatus for the separator may further include a position adjustment unit to adjust a position of the modular blade unit.

According to a seventh embodiment, in any one of the first to sixth embodiments, the modular blade unit may be disposed between a transport path of the substrate being transported in the direction and the coating roll.

According to an eighth embodiment, in any one of the first to seventh embodiments, the coating apparatus for the separator may further include a slot die to feed a second coating solution to the coating roll.

According to a ninth embodiment, there is provided a method for manufacturing a separator including applying a coating solution to at least one surface of a substrate using the coating apparatus for the separator of any one of the first to eighth embodiments.

According to a tenth embodiment, in the ninth embodiment, a coating thickness, a coating loading quantity, a coating pattern or two or more thereof may be changed by adjusting a gap between the coating roll and the blade facing each other.

According to an eleventh embodiment, in any one of the ninth embodiment or the tenth embodiment, applying the coating solution may include changing a coating thickness, a coating loading quantity, a coating pattern or two or more thereof by replacing the blade of the modular blade unit.

According to a twelfth embodiment, in any one of the ninth to eleventh embodiments, applying the coating solution may include differently changing a coating thickness, a coating loading quantity, a coating pattern or two or more thereof along a length direction of the substrate by adjusting a position of the modular blade unit with time.

According to a thirteenth embodiment, in any one of the ninth to twelfth embodiments, the method may include, before applying the coating solution, measuring properties of the coating solution, and adjusting a position of the modular blade unit according to the measured properties of the coating solution.

### Advantageous Effects

The coating apparatus for the separator according to an embodiment of the present disclosure may control the coating thickness, loading quantity or pattern of the coating layer on the substrate without needing to replace the coating roll.

The coating apparatus for the separator according to an embodiment of the present disclosure may control the coating thickness, loading quantity or pattern of the coating layer along the length direction of the substrate.

The coating apparatus for the separator according to an embodiment of the present disclosure may form the coating layer in various patterns by using the coating roll having the plurality of grooved portions of engraved pattern.

The coating apparatus for the separator according to an embodiment of the present disclosure may form the coating layer in various shapes by applying different coating solutions to the grooved portions and the ungrooved portions using the coating roll having the plurality of grooved portions of engraved pattern.

The coating apparatus for the separator according to an embodiment of the present disclosure may make it easy to quantitatively control the coating solution and improve reproducibility and repeatability by using the coating roll having the plurality of grooved portions of engraved pattern.

The method for manufacturing the separator according to an embodiment of the present disclosure may control the coating thickness, loading quantity or pattern of the coating layer on the substrate without needing to replace the coating roll.

The method for manufacturing the separator according to an embodiment of the present disclosure may control the coating thickness, loading quantity or pattern of the coating layer along the length direction of the substrate.

### BRIEF DESCRIPTION OF THE DRAWINGS

The accompanying drawings illustrate the exemplary embodiments of the present disclosure and together with the foregoing description, serve to provide a better understanding of the technical aspects of the present disclosure, and thus the present disclosure should not be construed as being limited to the accompanying drawings.
FIG. 1 is a diagram schematically showing the structure of a coating apparatus for a separator according to an embodiment of the present disclosure.
FIG. 2 is a diagram schematically showing the structure of a blade according to an embodiment of the present disclosure.
FIG. 3 is a diagram schematically showing the structure of a blade according to an embodiment of the present disclosure.
FIG. 4 is a diagram schematically showing the structure of a modular blade unit according to an embodiment of the present disclosure.
FIG. 5 is a diagram schematically showing the structure of blades of different embossed patterns according to an embodiment of the present disclosure.
FIG. 6 is a diagram schematically showing the structure of a coating apparatus for a separator according to an embodiment of the present disclosure.
FIG. 7 is a diagram schematically showing the structure of a coating apparatus for a separator according to an embodiment of the present disclosure.
FIG. 8 is a diagram schematically showing the structure of a coating apparatus for a separator according to an embodiment of the present disclosure.
FIG. 9 is a diagram showing the removal of some of a coating solution transferred to a coating roll by using the coating roll having no grooved portions on the surface and a blade having no protruding portions of embossed pattern.
FIG. 10 is a diagram showing the removal of some of a coating solution transferred to a coating roll by using the coating roll having no grooved portions on the surface and a blade having protruding portions of embossed pattern.
FIG. 11 is a diagram showing the removal of some of a coating solution transferred to a coating roll by using the coating roll having grooved portions on the surface and a blade having no protruding portions of embossed pattern.
FIG. 12 is a diagram showing the removal of some of a coating solution transferred to a coating roll by using the coating roll having grooved portions on the surface and a blade having protruding portions of embossed pattern.

### BEST MODE

It should be understood that the terms used in the specification and the appended claims should not be construed as limited to general and dictionary meanings, and rather, should be interpreted based on the meanings and concepts corresponding to technical aspects of the present disclosure on the basis of the principle that the inventor is allowed to define the terms appropriately for the best explanation.

The terms as used herein are used to describe the exemplary embodiments of the present disclosure but not intended to be limiting. The singular forms include the plural forms unless the context clearly indicates otherwise.

### Definition

The term 'comprise', 'include' or 'have' when used in this specification, specifies the presence of the stated elements, but does not preclude the presence or addition of one or more other elements, unless the context clearly indicates otherwise.

In this specification, 'A and/or B' refers to either A or B or both.

Hereinafter, the embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited to the disclosed embodiments. In the drawings, to clearly describe the present disclosure, an irrelevant description is omitted, and like reference numerals are affixed to like elements throughout the specification.

### Coating apparatus for separator

The present disclosure provides a coating apparatus for a separator.

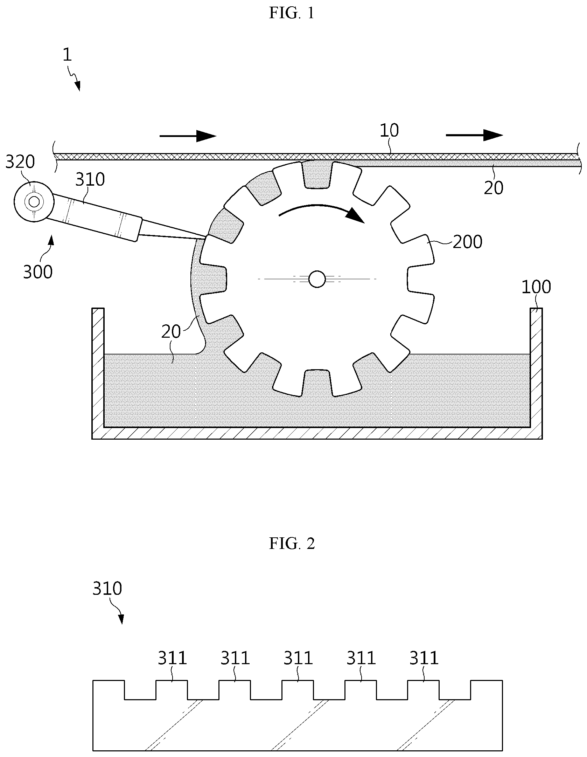

FIG. 1 is a diagram schematically showing the structure of the coating apparatus 1 for the separator according to an embodiment of the present disclosure.

Referring to FIG. 1, the coating apparatus 1 for the separator includes a storage unit 100 accommodating a coating solution 20; a coating roll 200 to transfer the coating solution 20 from the storage unit 100 to at least one surface of a substrate 10 that is transferred in a direction; and a modular blade unit 300 to remove some of the coating solution 20 on the surface of the coating roll 200, wherein the modular blade unit 300 includes at least one blade 310, and the coating roll 200 has a plurality of grooved portions 201 of engraved pattern on the surface and is configured to rotate in the same direction as the transport direction of the substrate 10.

The coating apparatus 1 for the separator according to an embodiment of the present disclosure includes the replaceable modular blade unit 300 and the coating roll 200 having the plurality of grooved portions 201 of engraved pattern.

The coating apparatus 1 of the present disclosure may form the coating layer in various patterns without needing to replace the coating roll, compared to the use of a single blade. Furthermore, because the coating layer may be formed in various patterns, it may be possible to achieve high-precision coating and improve coating uniformity.

Furthermore, compared to the use of a flat coating roll, the coating roll 200 of the present disclosure has the grooved portion 201 that is clearly distinguished from an ungrooved portion, making it possible to hold different coating solutions, thereby forming the coating layer in various shapes as opposed to a flat coating roll. In addition, due to the presence of the grooved portion, it may be possible to achieve constant loading of the coating solution.

In other words, because the coating apparatus 1 of the present disclosure has the grooved portion 201, it may be possible to hold a larger amount of coating solution compared to the absence of the grooved portion 201, thereby improving reproducibility, and because the coating apparatus 1 of the present disclosure also has the modular blade unit 300, the properties of the separator may be only changed by replacing the blade.

In an embodiment of the present disclosure, the modular blade unit 300 may further include a blade rotation portion 320 to rotate the plurality of blades 310. The modular blade unit 300 may rotate the plurality of blades 310 around the blade rotation portion 320.

In an embodiment of the present disclosure, the modular blade unit 300 is not limited to a particular position and connection relationship and may have any position and connection relationship for removing some of the coating solution on the coating roll 200. For example, the modular blade unit 300 may be connected to the outside of the storage unit 100, or may be disposed without direct connection to the storage unit 100.

The substrate 10 and the coating solution 20 in each drawing are shown for reference, but not intended to limit the coating apparatus for the separator of the present disclosure.

FIG. 2 is a diagram schematically showing the structure of the blade 310 according to an embodiment of the present disclosure.

In an embodiment of the present disclosure, the blade 310 may have a protruding portion 311 of embossed pattern. Specifically, the blade 310 may have the protruding portion 311 of embossed pattern at an edge that contacts the coating roll 200. The blade 310 may have at least one protruding portion 311 or at least two protruding portions 311 according to a desired embossed pattern. In this instance, the protruding portion 311 may be closer to the surface of the coating roll 200 than an un-protruding portion, and as the coating roll 200 rotates, a larger amount of coating solution that contacts the protruding portion 311 may be removed. Accordingly, a predetermined pattern may be formed in the coating layer.

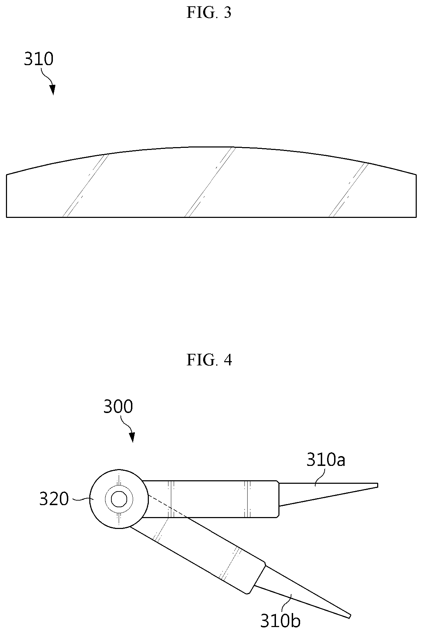

FIG. 3 is a diagram schematically showing the structure of the blade 310 according to an embodiment of the present disclosure.

In an embodiment of the present disclosure, the blade 310 may have, at the edge that contacts the coating roll 200, a convex shape, i.e., a shape that curves upward such that the central portion of the blade 310 is located close to the coating roll 200. In the case where the blade 310 has the above-described shape, when the coating roll 200 has a smooth surface, the coating layer may be formed in a shape such that it is thicker at two edges in the width direction of the substrate 10. For example, due to sliding occurring in the electrode active material, the electrode may have a smaller height at two ends than the center. In this instance, when the blade 310 has the shape as shown in FIG. 3, the height difference may be compensated for by increasing the coating thickness at the two ends of the coating layer in the width direction.

FIG. 4 is a diagram schematically showing the structure of the modular blade unit 300 according to an embodiment of the present disclosure.

In an embodiment of the present disclosure, the modular blade unit 300 may detachably include at least one blade 310, 310a, 310b. The modular blade unit 300 may detachably include the blades 310, 310a, 310b having various shapes according to the desired purpose.

In an embodiment of the present disclosure, the modular blade unit 300 may include at least two blades 310, 310a, 310b. With the two or more blades 310, 310a, 310b having different shapes, the coating layer may be formed in different surface patterns on at least one surface of the substrate 10 to which the coating solution is transferred.

In an embodiment of the present disclosure, the modular blade unit 300 may further include the blade rotation portion 320 to rotate the plurality of blades 310, 310a, 310b. The modular blade unit 300 may rotate the plurality of blades 310, 310a, 310b around the blade rotation portion 320.

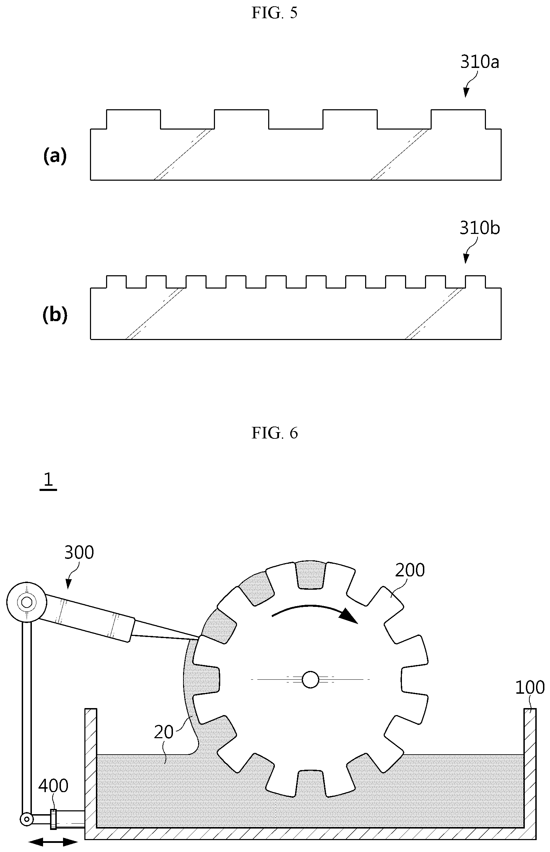

FIG. 5 is a diagram schematically showing the structure of the blades 310 of different embossed patterns according to an embodiment of the present disclosure.

In an embodiment of the present disclosure, the modular blade unit 300 may include at least two blades 310a, 310b, and the at least two blades 310a, 310b may have the protruding portions of different embossed patterns. For example, as shown in FIG. 5, the first blade 310a and the second blade 310b having the protruding portions of different embossed patterns may form the coating layers of different surface patterns on at least one surface of the substrate 10 to which the coating solution is transferred. Specifically, with the first blade 310a and the second blade 310b, the coating layer may be formed in various surface patterns without needing to replace the coating roll.

FIG. 6 is a diagram schematically showing the structure of the coating apparatus 1 for the separator according to an embodiment of the present disclosure.

In an embodiment of the present disclosure, the coating apparatus 1 for the separator may further include a position adjustment unit 400 to adjust the position of the modular blade unit 300. For example, the position adjustment unit 400 may be connected to the outer periphery of the storage unit 100 and configured to adjust the position of the modular blade unit 300. The position adjustment unit 400 may adjust the position of the modular blade unit 300 upward/downward or leftward/rightward by a device, for example, a cylinder.

In an embodiment of the present disclosure, the position adjustment unit 400 may fix the position of the modular blade unit 300 or move the position of the modular blade unit 300 with time. For example, the position adjustment unit 400 may move the modular blade unit 300 away from the surface of the coating roll 200 with time. Accordingly, the thickness of the coating layer may be continuously/discontinuously changed according to the length of the separator, thereby manufacturing the separator with high quality.

In an embodiment of the present disclosure, the coating apparatus 1 for the separator may further include a measuring device (not shown) to measure the properties of the coating solution, for example, the viscosity of the coating solution, and the position adjusting unit 400 may further include a receiver device (not shown) to measure the properties of the coating solution and adjust the position of the modular blade unit 300 based on the measured data. Accordingly, the amount of the coating solution applied to the substrate 10 may be adjusted according to the viscosity of the coating solution.

In an embodiment of the present disclosure, the modular blade unit 300 may be disposed between the transport path of the substrate 10 being transported in a direction and the coating roll 200. When the modular blade unit 300 is disposed between the transport path of the substrate 10 being transported in a direction and the coating roll 200, and specifically, the modular blade unit 300 is disposed on a side where the substrate 10 is transported to the coating roll 200, the modular blade unit 300 may remove some of the coating solution.

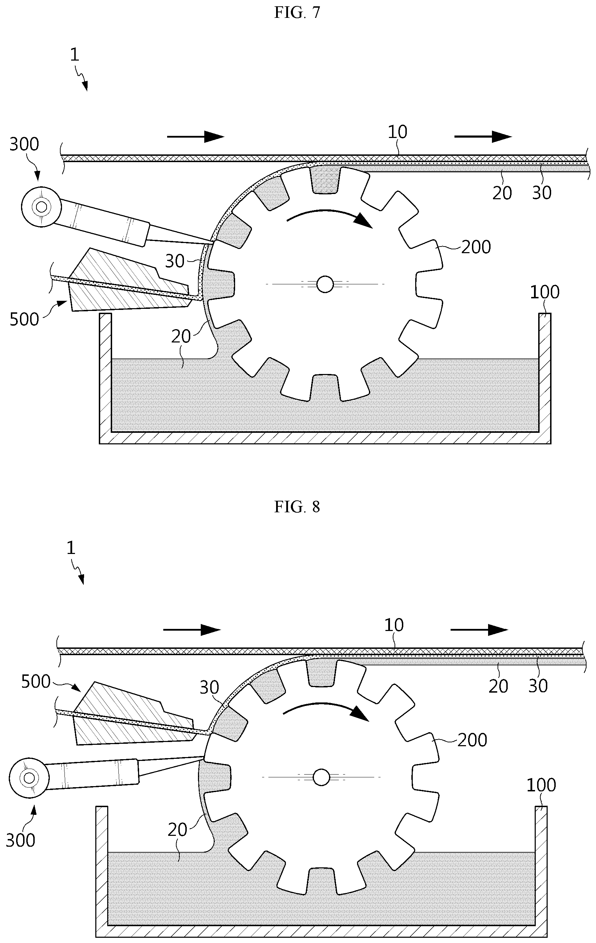

In an embodiment of the present disclosure, the coating apparatus 1 for the separator may further include a slot die 500 to feed a second coating solution 30 to the coating roll 200. As shown in FIG. 7, the slot die 500 may feed the second coating solution 30 into the coating solution from which some of the coating solution 20 have been removed by the modular blade unit 300, or may feed the second coating solution 30 into the coating solution 20 before the removal of some of the coating solution 20 by the modular blade unit 300 as shown in FIG. 8.

In an embodiment of the present disclosure, the coating roll 200 may have the grooved portion 201 to form an area for holding the coating solution 20. In this case, when the second coating solution 30 of different composition from the coating solution is fed to the coating roll 200 through the slot die 500, the coating layer having different composition at each location may be formed by only one coating apparatus 1 for the separator.

Meanwhile, as the modular blade unit 300 may have, for example, the projecting portion of embossed pattern, the pattern of the coating layer may be controlled by adjusting the shape of the modular blade unit 300 and the shape of the slot die 500.

In an embodiment of the present disclosure, the coating apparatus 1 for the separator may further include a backup roll (not shown) opposite the coating roll 200 with the substrate being transported in a direction positioned therebetween. In this case, it may be easier to transfer the coating solution to the substrate.

### Method for manufacturing separator

The present disclosure provides a method for manufacturing a separator.

The method for manufacturing the separator of the present disclosure includes applying the coating solution 20 to at least one surface of the substrate 20 by using the above-described coating apparatus 1 for the separator.

In an embodiment of the present disclosure, the method for manufacturing the separator may change the coating thickness, coating loading quantity, coating pattern or two or more thereof, by adjusting the gap between the coating roll 200 and the blade 310 facing each other.

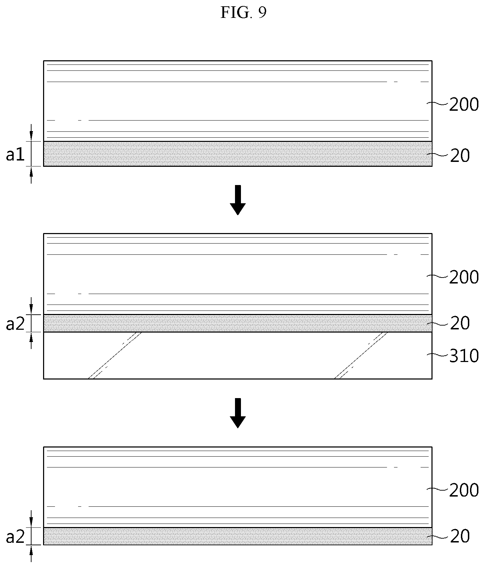

FIG. 9 is a diagram showing the removal of some of the coating solution 20 transferred to the coating roll 200 by using the coating roll 200 having no grooved portions 201 on the surface and the blade 310 having no protruding portions 311 of embossed pattern.

Specifically, the coating solution 20 transferred from the storage unit 100 to the surface of the coating roll 200 may be as thick as a1 on the coating roll 200, and as some of the coating solution 20 are removed by the blade 310, the coating solution 20 may be as thick as a2 on the coating roll 200 (where a1>a2).

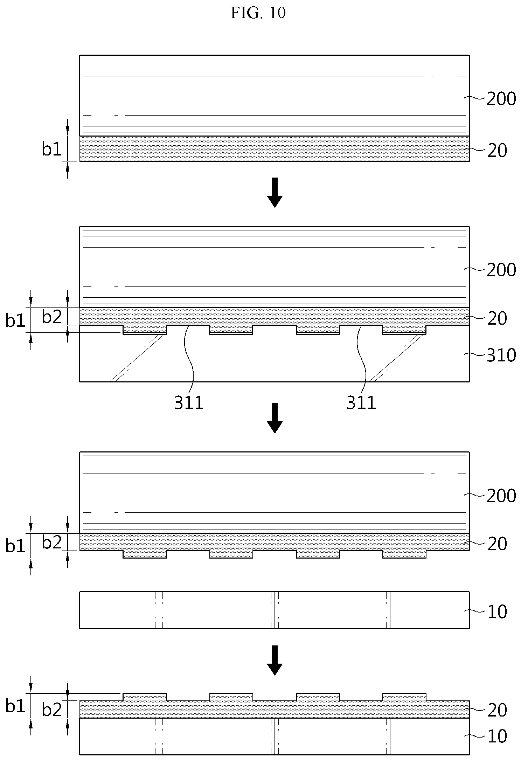

FIG. 10 is a diagram showing the removal of some of the coating solution 20 transferred to the coating roll 200 by using the coating roll 200 having no grooved portions on the surface and the blade 310 having the protruding portions 311 of embossed pattern.

Specifically, the coating solution 20 transferred from the storage unit 100 to the surface of the coating roll 200 may be as thick as b1 on the coating roll 200, and as some of the coating solution 20 are removed by the blade 310, the coating solution 20 may have a region having a thickness of b1 and a region having a thickness of b2 on the coating roll 200 (where b1>b2). Specifically, by the protruding portions 311 of embossed pattern, the partially removed region of the coating solution 20 may have the thickness of b2, and the unremoved region of the coating solution 20 may have the original thickness of b1.

Meanwhile, the partially removed region of the coating solution 20 is transferred to the substrate 10. In this case, although the time during which the coating solution flows may vary depending on the viscosity and physical properties of the coating solution used, after a sufficient amount of time passes, the thickness of the coating solution 20 on the coating roll 200 may be substantially maintained on the substrate.

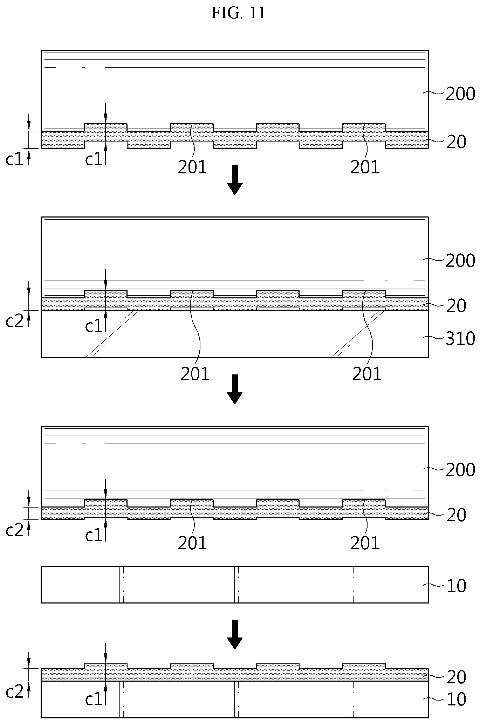

FIG. 11 is a diagram showing the removal of some of the coating solution 20 transferred to the coating roll 200 by using the coating roll 200 having the grooved portions 201 on the surface and the blade 310 having no protruding portions of embossed pattern.

Specifically, the coating solution 20 transferred from the storage unit 100 to the surface of the coating roll 200 may be as thick as c1 on the coating roll 200, and as some of the coating solution 20 are removed by the blade 310, the coating solution 20 may have a region having a thickness of c1 and a region having a thickness of c2 on the coating roll 200 (where c1>c2). Specifically, by the blade 310, the partially removed region of the coating solution 20 may have the thickness of c2, and the unremoved region of the coating solution 20 may have the original thickness of c1.

Meanwhile, the partially removed region of the coating solution 20 on the coating roll 200 is transferred to the substrate 10. In this case, although the time during which the coating solution flows may vary depending on the viscosity and physical properties of the coating solution used, after a sufficient amount of time passes, the thickness of the coating solution 20 on the coating roll 200 may be substantially maintained on the substrate.

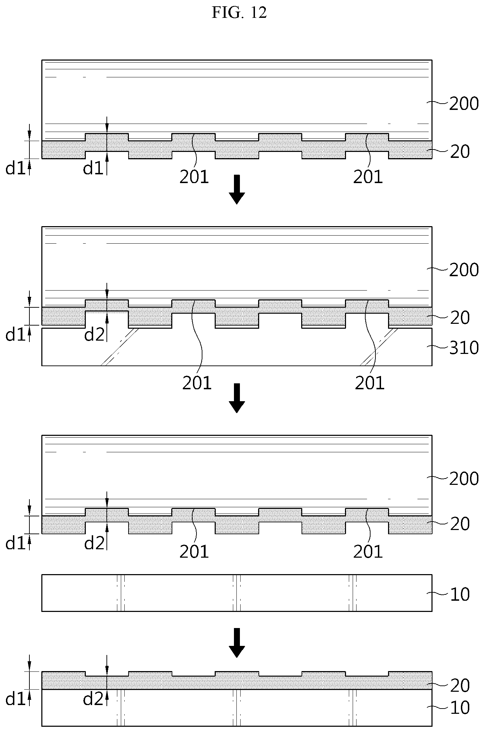

FIG. 12 is a diagram showing the removal of some of the coating solution 20 transferred to the coating roll 200 by using the coating roll 200 having the grooved portions 201 on the surface and the blade 310 having the protruding portions 311 of embossed pattern.

Specifically, the coating solution 20 transferred from the storage unit 100 to the surface of the coating roll 200 may be as thick as d1 on the coating roll 200, and as some of the coating solution 20 are removed by the blade 310, the coating solution 20 may have a region having a thickness of d1 and a region having a thickness of d2 on the coating roll 200 (where d1>d2). Specifically, by the blade 310, the partially removed region of the coating solution 20 may have the thickness of d2, and the unremoved region of the coating solution 20 may have the original thickness of d1.

Meanwhile, the partially removed region of the coating solution 20 on the coating roll 200 is transferred to the substrate 10. In this case, although the time during which the coating solution flows may vary depending on the viscosity and physical properties of the coating solution used, after a sufficient amount of time passes, the thickness of the coating solution 20 on the coating roll 200 may be substantially maintained on the substrate.

In an embodiment of the present disclosure, the step of applying the coating solution may include changing the coating thickness, coating loading quantity, coating pattern or two or more thereof by replacing the blade 310 of the modular blade unit 300. Specifically, the coating thickness, coating loading quantity and/or coating pattern on one substrate 10 may be changed by replacing the blade 310 of the modular blade unit 300.

In an embodiment of the present disclosure, the step of applying the coating solution may include differently changing the coating thicknesses, coating loading quantity, coating patterns, or two or more thereof along the length direction of the substrate 10 by adjusting the position of the modular blade unit 300 with time. Specifically, the amount of coating solution 20 located on the coating roll 200 may be adjusted by placing the modular blade unit 300 toward or away from the coating roll 200 with time, and through this, the coating layer formed on the substrate 10 may be formed with different thickness along the length direction of the substrate.

In an embodiment of the present disclosure, before the step of applying the coating solution, the properties of the coating solution may be measured, and the position of the modular blade unit may be adjusted according to the measured properties of the coating solution. Specifically, the properties of the coating solution may be measured, and the position of the modular blade unit 300 may be adjusted based on the measured data to adjust the amount of coating solution 20 located on the coating roll 200, and through this, the coating thickness and/or coating loading quantity on the substrate 10 may be adjusted.

In an embodiment of the present disclosure, the method for manufacturing the separator may include applying the second coating solution to the coating roll by using the second coating solution feeder such as the slot die, and accordingly, the coating layer having different composition at each location may be formed.

In an embodiment of the present disclosure, before the step of applying the coating solution to the substrate, the method for manufacturing the separator may include preparing the coating solution including a binder polymer and inorganic particles.

The coating solution including the binder polymer and the inorganic particles may be prepared by adding the binder polymer and the inorganic particles to a solvent.

In an embodiment of the present disclosure, the solvent may include an aqueous solvent or an organic solvent.

In an embodiment of the present disclosure, the aqueous solvent may include water or an aqueous solvent including water. Furthermore, when there are limits to drying speed and temperature, methanol, ethanol or isopropyl alcohol having lower boiling point than water may be used as a co-solvent.

In an embodiment of the present disclosure, the organic solvent may include cyclic aliphatic hydrocarbons including cyclopentane or cyclohexane; aromatic hydrocarbons including toluene, xylene or ethylbenzene; ketones including acetone, ethyl methyl ketone, diisopropyl ketone, cyclohexanone, methylcyclohexane or ethylcyclohexane; chlorinated aliphatic hydrocarbons including methylene chloride, chloroform or carbon tetrachloride; esters including ethyl acetate, butyl acetate, γ-butyrolactone or ε-caprolactone; acylonitriles including acetonitrile or propionitrile; ethers including tetrahydrofuran or ethylene glycol diethyl ether; alcohols including methanol, ethanol, isopropanol, ethylene glycol or ethylene glycol monomethyl ether; or amides including N-methylpyrrolidone or N,N-dimethylformamide. The organic solvent may include acetone when considering the advantages of the drying process.

In an embodiment of the present disclosure, these organic solvents may be used alone or in combination. Among them, particularly, solvents having low boiling point and high volatility are desirable because they are removed at low temperature in a short time. Specifically, such solvents may preferably include acetone, toluene, cyclohexanone, cyclopentane, tetrahydrofuran, cyclohexane, xylene, N-methylpyrrolidone, or a mixture thereof.

In an embodiment of the present disclosure, the binder polymer is not limited to a particular type and may include any material that provides bond strength between the inorganic particles and bond strength between the porous coating layer and the porous polymer substrate. The binder polymer may include, for example, polyvinylidene fluoride-co-hexafluoro propylene (PVDF-co-HFP), polyvinylidene fluoride-co-trichloro ethylene, polyvinylidene fluoride-co-chlorotrifluoro ethylene, poly (methyl) methacrylate, polyethyl (meth)acrylate, poly n-propyl (meth)acrylate, poly isopropyl (meth)acrylate, poly n-butyl (meth)acrylate, poly t-butyl (meth)acrylate, poly sec-butyl (meth)acrylate, poly pentyl (meth)acrylate, poly 2-ethylbutyl poly (meth)acrylate, poly 2-ethylhexyl (meth)acrylate, poly n-octyl (meth)acrylate, poly isooctyl (meth)acrylate, poly isononyl (meth)acrylate, poly lauryl (meth)acrylate, poly tetradecyl (meth)acrylate, poly N-vinylpyrrolidinone, polyacrylonitrile, polyvinylacetate, polyethylene-co-vinyl acetate, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, acrylonitrile-styrene-butadiene copolymer, polyimide, or two or more thereof.

In an embodiment of the present disclosure, the inorganic particles are not limited to a particular one and may include any electrochemically stable one. That is, the inorganic particles that may be used in the present disclosure are not limited to a particular type and may include any type of inorganic particles in which oxidation and/or reduction reaction does not occur in the operating voltage range (for example, 0 to 5 V vs Li/Li+) of the electrochemical device applied. In particular, when inorganic particles having high dielectric constant are used as the inorganic particles, it may contribute to the increased degree of dissociation of an electrolyte salt, for example, a lithium salt, in the liquid electrolyte, thereby improving ionic conductivity of the electrolyte solution.

By the above-described reasons, the inorganic particles preferably include high-dielectric constant inorganic particles having the dielectric constant of 5 or more, and preferably 10 or more. Non-limiting examples of the inorganic particles having the dielectric constant of 5 or more include BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, SiC, TiO₂, or a mixture thereof.

In addition, the inorganic particles may include inorganic particles having the ability to transport lithium ions, i.e., inorganic particles that contain lithium but do not store lithium and have the function of moving lithium ions. Non-limiting examples of the inorganic particles having the ability to transport lithium ions include lithium phosphate (Li₃PO₄), lithium titanium phosphate (LixTiy(PO₄)₃, 0 < x < 2 , 0 < y < 3 ), lithium aluminum titanium phosphate (LiₓAl_{y}Ti_{z}(PO₄)₃, 0 < x < 2, 0 < y <1, 0 < z < 3), (LiAlTiP)ₓO_{y}-based glass (0 < x < 4 , 0 < y < 13) such as 14Li₂O-9Al₂O₃-38TiO₂-39P₂O₅, lithium lanthanum titanate (LiₓLa_{y}TiO₃, 0 < x < 2 , 0 < y < 3), lithium germanium thiophosphate (LiₓGe_{y}P_{z}S_{w}, 0 < x < 4, 0< y < 1, 0 < z < 1, 0 < w < 5) such as Li_{3.25}Ge_{0.25}P_{0.75}S₄, lithium nitride (LiₓN_{y}, 0 < x < 4, 0 < y < 2) such as Li₃N, SiS₂-based glass (LiₓSi_{y}S_{z}, 0 < x < 3, 0 <y < 2, 0 < z < 4) such as Li₃PO₄-Li₂S-SiS₂, P₂S₅-based glass (LiₓP_{y}S_{z}, 0 < x < 3, 0< y < 3, 0 < z < 7) such as LiI-Li₂S-P₂S₅, or a mixture thereof.

In addition, the inorganic particles may have a particle size in a range of 3 µm to 200 µm when they are added, and when applied to the porous polymer substrate, the D₅₀ of the inorganic particles is not limited to a particular range, but preferably ranges from 0.1 µm to 1.5 µm to form the coating layer with even thickness and optimal porosity. When the D₅₀ of the inorganic particles is smaller than 0.1 µm, dispersion may be reduced, and when the D₅₀ of the inorganic particles is larger than 1.5 µm, the inorganic coating layer may be formed with a larger thickness.

A weight ratio of the binder polymer to the inorganic particles may be, for example, 50:50 to 99:1 or 70:30 to 95:5. When the weight ratio of the binder polymer to the inorganic particles falls within the aforementioned range, the porous coating layer having optimal pore size and porosity may be formed, and heat resistance characteristics of the separator may be improved.

In an embodiment of the present disclosure, the viscosity of the coating solution may be 5 cps to 30 cps, or 10 cps to 20 cps at 23°C. When the viscosity of the coating solution falls within the aforementioned range, the coating layer may have a clearer pattern shape. In this case, the viscosity may be, for example, measured using a Brookfield viscometer (DV2T viscometer, 12 rpm, spindle 24) at 23°C.

In an embodiment of the present disclosure, the substrate may include, for example, polyethylene, polypropylene, polyimide, polyethylene terephthalate, polyamide, polysulfone, polyvinylidene fluoride, polyacrylonitrile, or two or more thereof.

## Claims

1. A coating apparatus for a separator, comprising:
a storage unit accommodating a coating solution;
a coating roll configured to transfer the coating solution from the storage unit to at least one surface of a substrate being transferred in a direction; and
a modular blade unit configured to remove some of the coating solution present on a surface of the coating roll,
wherein the modular blade unit includes at least one blade,
wherein the coating roll has a plurality of grooved portions of engraved pattern on the surface, and
wherein the coating roll rotates in a same direction as the transport direction of the substrate.

2. The coating apparatus for the separator according to claim 1,
wherein the blade has a protruding portion of embossed pattern.

3. The coating apparatus for the separator according to claim 1,
wherein the modular blade unit includes at least two blades.

4. The coating apparatus for the separator according to claim 3,
wherein the modular blade unit further includes a blade rotation portion to rotate the plurality of blades.

5. The coating apparatus for the separator according to claim 1,
wherein the modular blade unit includes at least two blades, and
wherein the at least two blades have protruding portions of different embossed patterns.

6. The coating apparatus for the separator according to claim 1, further comprising:
a position adjustment unit to adjust a position of the modular blade unit.

7. The coating apparatus for the separator according to claim 1,
wherein the modular blade unit is disposed between a transport path of the substrate being transported in the direction and the coating roll.

8. The coating apparatus for the separator according to claim 1, further comprising:
a slot die to feed a second coating solution to the coating roll.

9. A method for manufacturing a separator, the method comprising:
applying a coating solution to at least one surface of a substrate using the coating apparatus for the separator defined in claim 1.

10. The method for manufacturing the separator according to claim 9,
wherein a coating thickness, a coating loading quantity, a coating pattern or two or more thereof is changed by adjusting a gap between the coating roll and the blade facing each other.

11. The method for manufacturing the separator according to claim 9,
wherein applying the coating solution comprises changing a coating thickness, a coating loading quantity, a coating pattern or two or more thereof by replacing the blade of the modular blade unit.

12. The method for manufacturing the separator according to claim 9,
wherein applying the coating solution comprises differently changing a coating thickness, a coating loading quantity, a coating pattern or two or more thereof along a length direction of the substrate by adjusting a position of the modular blade unit with time.

13. The method for manufacturing the separator according to claim 9,
wherein the method comprises, before applying the coating solution, measuring properties of the coating solution, and adjusting a position of the modular blade unit according to the measured properties of the coating solution.
